(19) Europäisches Patentamt
European Patent Office
Office européen des brevets

(11) **EP 2 459 621 B1**

(12) **FASCICULE DE BREVET EUROPEEN**

(45) Date de publication et mention
de la délivrance du brevet:
**28.03.2018 Bulletin 2018/13**

(21) Numéro de dépôt: **10745406.8**

(22) Date de dépôt: **28.07.2010**

(51) Int Cl.:
*C08L 95/00* (2006.01)    *C08L 53/02* (2006.01)
*C08L 25/02* (2006.01)    *C08L 9/00* (2006.01)
*C08J 3/24* (2006.01)    *C08J 3/22* (2006.01)

(86) Numéro de dépôt international:
**PCT/IB2010/053420**

(87) Numéro de publication internationale:
**WO 2011/013073 (03.02.2011 Gazette 2011/05)**

(54) **PROCÉDÉ DE PRÉPARATION DE COMPOSITIONS BITUME/POLYMÈRE RÉTICULÉES SANS AGENT RÉTICULANT**

VERFAHREN ZUR HERSTELLUNG VON GEHÄRTETEN ASPHALT-/POLYMERZUSAMMENSETZUNGEN OHNE HÄRTUNGSMITTEL

METHOD FOR PREPARING CURED ASPHALT/POLYMER COMPOSITIONS WITHOUT A CURING AGENT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.07.2009 FR 0903729**

(43) Date de publication de la demande:
**06.06.2012 Bulletin 2012/23**

(73) Titulaire: **TOTAL MARKETING SERVICES**
**92800 Puteaux (FR)**

(72) Inventeurs:
• **HARDERS, Sylvia**
**25712 Buchholz (DE)**
• **CHAMINAND, Julien**
**F-69120 Vaulx en Velin (FR)**
• **MESNIL, Jean-Pierre**
**92800 Puteaux (FR)**

(74) Mandataire: **Hirsch & Associés**
**137, rue de l'Université**
**75007 Paris (FR)**

(56) Documents cités:
EP-A1- 1 586 606        EP-A1- 1 612 243
WO-A1-98/47966        WO-A1-2006/041560
WO-A1-2008/137394        WO-A2-2007/058994
GB-A- 1 076 648        US-A1- 2005 272 849

Remarques:
Le dossier contient des informations techniques présentées postérieurement au dépôt de la demande et ne figurant pas dans le présent fascicule.

**Description**

**DOMAINE TECHNIQUE**

La présente invention appartient au domaine des bitumes, en particulier au domaine des compositions bitume/polymère.

La présente invention concerne un procédé de préparation de compositions bitume/polymère réticulées en l'absence d'un agent réticulant. La présente invention concerne également les compositions bitume/polymère réticulées susceptibles d'être obtenues par ledit procédé. L'invention concerne en outre l'utilisation d'un polymère pour réticuler en l'absence de tout agent réticulant des compositions bitume/polymère. L'invention concerne enfin un procédé de préparation de solutions-mères réticulées ou non réticulées concentrées en polymère, lesdites solutions-mères réticulées ou non réticulées étant ensuite diluées avec du bitume pour fournir des compositions bitume/polymère réticulées.

**ART ANTERIEUR**

L'utilisation du bitume dans la fabrication de matériaux pour applications routières et industrielles est connue de longue date : le bitume est le principal liant hydrocarboné utilisé dans le domaine de la construction routière ou du génie civil.

Pour pouvoir être utilisé comme liant dans ces différentes applications, un bitume doit présenter certaines propriétés chimiques, physiques et mécaniques. Il est bien connu que les propriétés des bitumes purs peuvent être modifiées par l'addition de polymères. On peut citer par exemple, l'addition de copolymères de monovinyl aromatique et de diène conjugué, tels que les copolymères de styrène et de butadiène. Il est également bien connu que la résistance aux sollicitations mécaniques et thermiques, les performances rhéologiques, élastiques et mécaniques des compositions bitume/polymère, sont nettement améliorées lorsque des polymères de monovinyl aromatique et de diène conjugué, tels que les copolymères de styrène et de butadiène, sont réticulés à l'aide d'agents réticulants à base de soufre.

Lors de la préparation des compositions bitume/polymère réticulées au soufre, l'ajout de soufre peut entraîner des émissions d'hydrogène sulfuré (encore appelé sulfure d'hydrogène ou H2S). L'hydrogène sulfuré est un gaz incolore, assez toxique, qui présente de plus une odeur caractéristique, et ce à très basse concentration. Les émissions d'hydrogène sulfuré peuvent donc être gênantes, notamment pour les personnes qui préparent les compositions bitume/polymère réticulées à l'aide d'agents réticulants à base de soufre.

Il serait donc souhaitable, notamment pour le confort et la sécurité des travailleurs, de trouver un procédé de préparation de compositions bitume/polymère réticulées alternatif, ne mettant pas en oeuvre d'agents réticulants à base de soufre.

Ainsi, la demande WO2007/058994 décrit un procédé de préparation de compositions bitume/polymère sans agent réticulant. Le procédé met en oeuvre à une température entre 185°C et 221°C, pendant 4 à 30 heures, au moins un bitume et au moins une composition de polymères bloc comprenant :

(i) un copolymère dibloc comprenant un bloc hydrocarbure monovinyl aromatique et un bloc diène conjugué, ayant une masse moléculaire entre 30 000 et 78 000 et une teneur en vinyl de 35 à 80%, par rapport à la quantité de motifs diène conjugué,

(ii) éventuellement un ou plusieurs copolymères bloc comprenant au moins deux blocs monovinyl aromatique et au moins un bloc diène conjugué, le polymère bloc étant choisi parmi les copolymères linéaires tribloc ayant une masse moléculaire qui est 1,5 à 3 fois celle du copolymère dibloc (i), les copolymères bloc branchés ayant une masse moléculaire qui est 1,5 à 9 fois celle du copolymère dibloc (i), seuls ou en mélange, chaque copolymère bloc ayant une teneur en vinyl de 35 à 80%, par rapport à la quantité de motifs diène conjugué, le ratio entre (i) et (ii) étant supérieur à 1:1.

La demande WO2008/137394, quant à elle, décrit un procédé de préparation de compositions bitume/polymère sans agent réticulant. Le procédé met en oeuvre à une température entre 160°C et 221°C, pendant 2 à 30 heures, au moins un bitume et au moins une composition de polymères bloc comprenant :

- un copolymère bloc de formule S-B1-B2 avec S un bloc hydrocarbure monovinyl aromatique ayant une masse moléculaire entre 10 000 et 25 000, B1 un bloc polybutadiène ayant une teneur en vinyl inférieure à 15%, B2 un bloc polybutadiène ayant une teneur en vinyl supérieure à 25%, avec un ratio massique entre B1 et B2 égal ou supérieur à 1:1, le copolymère bloc S-B1-B2 ayant une masse moléculaire de 40 000 à 200 000 et,
- éventuellement un ou plusieurs copolymères bloc de formule (S-B1-B2)$_n$X avec S un bloc hydrocarbure monovinyl aromatique ayant une masse moléculaire entre 10 000 et 25 000, B1 un bloc polybutadiène ayant une teneur en vinyl inférieure à 15%, B2 un bloc polybutadiène ayant une teneur en vinyl supérieure à 25%, n un entier de 2 à 6, X un résidu d'agent de couplage, le copolymère bloc (S-B1-B2)$_n$X ayant une masse moléculaire 1,5 à 6,0 fois celle du copolymère bloc S-B1-B2, le ratio entre S-B1-B2 et (S-B1-B2)$_n$X étant supérieur à 1:1.

Dans le brevet EP0728814, des compositions bitumineuses comprenant un composant bitumineux et une composition de copolymère bloc de styrène/butadiène sont décrites. La composition de copolymère bloc de styrène/butadiène a une teneur en vinyl d'au moins 25% en poids par rapport à la teneur en butadiène totale, une teneur en dibloc de styrène/butadiène de 25% en poids ou moins et tout copolymère dibloc de styrène/butadiène non couplé a un poids moléculaire qui se situe dans la gamme de 100 000 à 170 000. Pour préparer ces compositions bitumineuses, le composant bitumineux et la composition de copolymère bloc sont chauffés à 180°C, sous agitation, pendant 60 minutes. Dans ce brevet les compositions bitume/polymère ne sont donc pas réticulées.

De même dans le brevet EP0850277, des compositions bitumineuses comprenant un composant bitumineux et une composition de copolymère bloc sont décrites. La composition de copolymère bloc comprend au moins un composant choisi parmi les copolymères triblocs linéaires, les copolymères blocs multibranchés et les copolymères diblocs à base de styrène et de butadiène, la teneur en vinyl de la composition de copolymère bloc étant d'au moins 25% en poids, par rapport à la teneur en diène totale, et tout copolymère dibloc non couplé ayant un poids moléculaire allant de 60 000 à 100 000. Pour préparer ces compositions bitumineuses, le composant bitumineux et la composition de copolymère bloc sont chauffés à 180°C, sous agitation, pendant 60 minutes. Dans ce brevet les compositions bitume/polymère ne sont donc pas réticulées.

Enfin, le brevet EP0907686 de la société demanderesse décrit un procédé de préparation de compositions bitume/polymère réticulées comprenant deux étapes. Dans une première étape, une composition bitume/polymère non réticulée est préparée par mise en contact à des températures comprises entre 100°C et 230°C, en particulier à 175°C, et sous agitation pendant au moins 10 minutes, généralement de l'ordre de quelques dizaines de minutes à quelques heures, en particulier pendant 2,5 heures, d'un bitume et d'un copolymère de styrène et de butadiène possédant une proportion de motifs à double liaison 1,2 issus du butadiène comprise entre 12% et 50% en poids dudit copolymère. Dans une deuxième étape, on incorpore un agent réticulant tel qu'un agent de couplage donneur de soufre pour réticuler la composition bitume/polymère non réticulée. Dans cette deuxième étape, on opère par mise en contact à des températures comprises entre 100°C et 230°C, en particulier à 175°C, et sous agitation pendant au moins 10 minutes, en particulier pendant 3 heures, de la composition bitume/polymère non réticulée obtenue à la première étape et d'un agent de couplage donneur de soufre.

## RESUME DE L'INVENTION

Dans ces circonstances, le but de la présente invention est de proposer un nouveau procédé de réticulation ne mettant pas en oeuvre d'agent réticulant, et permettant l'obtention de compositions bitume/polymère réticulées qui présentent des propriétés mécaniques et rhéologiques renforcées, notamment au niveau de leur consistance, et/ou de leur susceptibilité thermique, et/ou de leur retour élastique et/ou de leur propriétés en traction et/ou de leur cohésion et/ou de leur rigidité selon les spécifications Superpave et/ou de leur stabilité au stockage. D'autres caractéristiques telles que la résistance au vieillissement ou aux hydrocarbures, le comportement à basse température pourront aussi être améliorées. De même, pour les enrobés obtenus à partir des compositions bitume/polymère réticulées selon l'invention, l'objectif est d'améliorer leur comportement en fatigue et/ou leur résistance à l'orniérage et/ou leur résistance à la fissuration thermique.

La société demanderesse a mis au point un nouveau procédé de réticulation de compositions bitume/polymère en l'absence de tout agent réticulant mettant en oeuvre, éventuellement sous agitation, à une température comprise entre 180°C et 220°C, pendant une durée de 8 heures à 48 heures :

- au moins un bitume, dont la quantité est de 70% à 99% en masse, par rapport à la masse de la composition bitume/polymère, et
- au moins une composition polymérique, dont la quantité est de 1% à 30% en masse, par rapport à la masse de la composition bitume/polymère ;

ladite composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse, par rapport à la masse totale des motifs diène conjugué ;
ledit copolymère diséquencé comprenant, par rapport à la masse dudit copolymère, une quantité d'hydrocarbure monovinyl aromatique de 20% à 50% en masse et une quantité de diène conjugué de 50% à 80% en masse.

## BREVE DESCRIPTION

L'invention concerne un procédé de préparation de compositions bitume/polymère réticulées sans agent réticulant, dans lequel on met en contact, éventuellement sous agitation, à une température entre 180°C et 220°C, pendant une durée de 8 heures à 48 heures :

- au moins un bitume, dont la quantité est de 70% à 99% en masse, par rapport à la masse de la composition bitume/polymère, et
- au moins une composition polymérique, dont la quantité est de 1% à 30% en masse, par rapport à la masse de la composition bitume/polymère ;

ladite composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse, par rapport à la masse totale des motifs diène conjugué ;
ledit copolymère diséquencé comprenant, par rapport à la masse dudit copolymère, une quantité d'hydrocarbure monovinyl aromatique de 20% à 50% en masse et une quantité de diène conjugué de 50% à 80% en masse.

De préférence, le copolymère diséquencé a une teneur en motifs à doubles liaisons 1-2 issus du butadiène comprise entre 20% et 25% en masse par rapport à la masse totale des motifs diène conjugué.

De préférence, la masse moléculaire du copolymère diséquencé est supérieure ou égale à 90 000 g.mol$^{-1}$, de préférence supérieure ou égale à 100 000 g.mol$^{-1}$, plus préférentiellement supérieure ou égale à 110 000 g.mol$^{-1}$, encore plus préférentiellement supérieure ou égale à 120 000 g.mol$^{-1}$.

De préférence, la durée est de 8 heures à 30 heures, de préférence de 8 heures à 24 heures, plus préférentiellement de 10 heures à 20 heures, encore plus préférentiellement de 12 heures à 16 heures.

De préférence, la température est comprise entre 185°C et 215°C, de préférence entre 190°C et 210°C, plus préférentiellement entre 195°C et 205°C.

De préférence, la composition bitume/polymère réticulée ainsi obtenue a une élongation maximale, selon la norme NF EN 13587, supérieure ou égale à 400%, de préférence supérieure ou égale à 500%, plus préférentiellement supérieure ou égale à 600%, encore plus préférentiellement supérieure ou égale à 700%.

De préférence, la composition bitume/polymère réticulée ainsi obtenue a une contrainte à l'élongation maximale, selon la norme NF EN 13587, supérieure ou égale à 0,4 MPa, de préférence supérieure ou égale à 0,6 MPa, plus préférentiellement supérieure ou égale à 0,8 MPa, encore plus préférentiellement supérieure ou égale à 1,2 MPa.

De préférence, la composition bitume/polymère réticulée ainsi obtenue a une énergie conventionnelle à 400% d'élongation, selon la norme NF EN 13587, supérieure ou égale à 3 J/cm$^2$, de préférence supérieure ou égale à 5 J/cm$^2$, plus préférentiellement supérieure ou égale à 10 J/cm$^2$, encore plus préférentiellement supérieure ou égale à 15 J/cm$^2$.

De préférence, la teneur en hydrocarbure monovinyl aromatique du copolymère diséquencé est comprise entre 30% et 40% en masse par rapport à la masse dudit copolymère.

De préférence, le copolymère diséquencé comprend une charnière statistique, la teneur en hydrocarbure monovinyl aromatique sous forme de bloc étant comprise entre 15% et 30% en masse par rapport à la masse dudit copolymère et la teneur en hydrocarbure monovinyl aromatique dans la charnière statistique étant comprise entre 5% et 20% en masse par rapport à la masse dudit copolymère.

De préférence, l'hydrocarbure monovinyl aromatique est le styrène et le diène conjugué est le butadiène.

De préférence, la composition polymérique comprend au moins 85% en masse de copolymère diséquencé, par rapport à la masse de la composition polymérique, de préférence au moins 90% en masse, plus préférentiellement au moins 95% en masse, encore plus préférentiellement au moins 98% en masse.

De préférence, la quantité de composition polymérique est comprise entre 2% et 20% en masse, par rapport à la masse de la composition bitume/polymère, plus préférentiellement entre 5% et 10%.

L'invention concerne également, la composition bitume/polymère réticulée sans agent réticulant susceptible d'être obtenue par le procédé tel que défini ci-dessus.

L'invention concerne aussi l'utilisation d'une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse par rapport à la masse totale des motifs diène conjugué, dans un bitume pour réticuler sans agent réticulant une composition bitume/polymère ;
ledit copolymère diséquencé comprenant, par rapport à la masse dudit copolymère, une quantité d'hydrocarbure monovinyl aromatique de 20% à 50% en masse et une quantité de diène conjugué de 50% à 80% en masse ;

la quantité de ladite composition polymérique mise en oeuvre dans ledit procédé étant de 1% à 30% en masse, par rapport à la masse de la composition bitume/polymère, et

la quantité de bitume mise en oeuvre dans ledit procédé étant de 70% à 99% en masse, par rapport à la masse de la composition bitume/polymère.

L'invention concerne en outre, un procédé de préparation d'une solution-mère réticulée sans agent réticulant, dans lequel on met en contact, éventuellement sous agitation, à une température entre 180°C et 220°C, pendant une durée de 8 heures à 48 heures :

- au moins une huile,
- éventuellement au moins un bitume, et
- au moins une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse par rapport à la masse totale des motifs diène conjugué, étant entendu que si la solution-mère comprend à la fois une huile et du bitume, le rapport entre les quantités en masse d'huile et de bitume est compris entre 2:1 et 20:1 ;

ledit copolymère diséquencé comprenant, par rapport à la masse dudit copolymère, une quantité d'hydrocarbure monovinyl aromatique de 20% à 50% en masse et une quantité de diène conjugué de 50% à 80% en masse ; et la quantité de composition polymérique étant comprise entre 5% et 50%, par rapport à la masse de ladite solution-mère.

De préférence, le procédé de préparation d'une solution-mère réticulée sans agent réticulant, a les caractéristiques de durée et de température définies ci-dessus pour le procédé de préparation de compositions bitume/polymère réticulées sans agent réticulant.

Il est décrit un procédé de préparation d'une solution-mère non réticulée, dans lequel on met en contact, éventuellement sous agitation, à une température entre 120°C et 160°C, pendant une durée de 15 minutes à 4 heures, au moins une huile, éventuellement au moins un bitume, et au moins une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire supérieure ou égale à 80 000 g.mol$^{-1}$ et une teneur en motifs à doubles liaisons 1-2 issus du diène conjugué supérieure ou égale à 15% en masse par rapport à la masse totale des motifs diène conjugué.

De préférence, l'huile est une huile d'origine pétrolière ou une huile d'origine végétale.

De préférence, le procédé de préparation d'une solution-mère réticulée ou non réticulée met en oeuvre un copolymère diséquencé qui a les caractéristiques définies ci-dessus en termes de teneur en motifs à double liaisons 1-2 issus du diène conjugué, de masse moléculaire, de teneur en hydrocarbure monovinyl aromatique, de teneur en hydrocarbure monovinyl aromatique en présence d'une charnière statistique, de nature chimique de l'hydrocarbure monovinyl aromatique et du diène conjugué.

De préférence, la composition polymérique utilisée dans le procédé de préparation d'une solution-mère réticulée ou non réticulée comprend au moins 85% en masse de copolymère diséquencé, par rapport à la masse de la composition polymérique, de préférence au moins 90% en masse, plus préférentiellement au moins 95% en masse, encore plus préférentiellement au moins 98% en masse.

De préférence, la quantité de composition polymérique utilisée dans le procédé de préparation d'une solution-mère réticulée ou non réticulée est comprise entre 10% et 40% en masse, par rapport à la masse de la solution-mère, plus préférentiellement entre 20% et 30%.

L'invention concerne aussi une solution-mère réticulée sans agent réticulant susceptible d'être obtenue par le procédé de préparation tel que défini ci-dessus.

Il est décrit une solution-mère non réticulée susceptible d'être obtenue par le procédé de préparation tel que défini ci-dessus.

L'invention concerne aussi un procédé de préparation de compositions bitume/polymère réticulées sans agent réticulant par dilution de la solution-mère réticulée sans agent réticulant telle que définie ci-dessus, dans au moins un bitume, à une température comprise entre 160°C et 220°C, éventuellement sous agitation, pendant une durée de 15 minutes à 4 heures.

L'invention concerne aussi un procédé de préparation de compositions bitume/polymère réticulées sans agent réticulant par dilution d'une solution-mère non réticulée, obtenue par mise en contact, éventuellement sous agitation, à une température entre 120°C et 160°C, pendant une durée de 15 minutes à 4 heures, au moins une huile, éventuellement au moins un bitume, et au moins une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse par rapport à la masse totale des motifs diène conjugué, ledit copolymère diséquencé comprenant, par rapport à la masse dudit copolymère, une quantité d'hydrocarbure monovinyl aromatique de 20% à 50% en masse, et une quantité de diène conjugué de 50% à 80% en masse ;

dans au moins un bitume, à une température comprise entre 180°C et 220°C, éventuellement sous agitation, pendant une durée de 8heures à 48 heures, étant entendu que si la solution-mère comprend à la fois une huile et du bitume, le rapport entre les quantités en masse d'huile et de bitume est compris entre 2:1 et 20:1 ;

la quantité de composition polymérique mise en oeuvre dans ledit procédé étant de 1% à 30% en masse, par rapport à la masse de la composition bitume/polymère, et

la quantité de bitume mise en oeuvre dans ledit procédé étant de 70% à 99% en masse, par rapport à la masse de la composition bitume/polymère.

De préférence, le procédé de préparation de compositions bitume/polymère réticulées sans agent réticulant par dilution de la solution-mère non réticulée a les caractéristiques de durée et de température définies ci-dessus pour le procédé de préparation de compositions bitume/polymère réticulées sans agent réticulant.

De préférence, la composition bitume/polymère réticulée ainsi obtenue a les caractéristiques définies ci-dessus en termes d'élongation maximale, de contrainte à l'élongation maximale et d'énergie conventionnelle à 400% d'élongation.

Enfin, l'invention concerne une composition bitume/polymère réticulée sans agent réticulant susceptible d'être obtenue par les procédés de dilution de la solution-mère réticulée ou non réticulée définis ci-dessus.

## DESCRIPTION DETAILLEE

L'invention concerne un procédé de préparation de compositions bitume/polymère réticulées, en l'absence d'agent réticulant. Par «en l'absence d'agent réticulant » ou « sans agent réticulant », il faudra comprendre un procédé dans lequel l'agent réticulant est présent sous forme de traces ou d'impuretés, la quantité d'agent réticulant sera alors inférieure 0,01% en masse, par rapport à la masse de la composition bitume/polymère, de préférence inférieure 0,001% en masse. De telles traces ou impuretés pourraient provenir d'une contamination par un mélange d'une autre nature mis en oeuvre dans le réacteur, cet autre mélange utilisant un agent réticulant.

Le procédé selon l'invention met en oeuvre une composition polymérique, et plus précisément une composition polymérique comprenant un copolymère particulier. Ce copolymère, est un copolymère diséquencé d'un bloc hydrocarbure monovinyl aromatique et d'un bloc diène conjugué. Par copolymère diséquencé d'un bloc hydrocarbure monovinyl aromatique et d'un bloc diène conjugué, on entend un copolymère constitué d'un bloc de motifs hydrocarbure monovinyl aromatique et d'un bloc de motifs diène conjugué éventuellement comprenant une charnière notamment statistique à base de motifs hydrocarbure monovinyl aromatique et/ou de motifs diène conjugué. Le copolymère diséquencé d'un bloc hydrocarbure monovinyl aromatique et d'un bloc diène conjugué selon l'invention, que l'on peut noter « SB », n'est donc pas contenu dans un copolymère triséquencé d'un bloc hydrocarbure monovinyl aromatique et d'un bloc diène conjugué (SBS) et ne fait pas non plus partie d'une branche d'un copolymère étoilé du type (SB)$_n$X.

Le diène conjugué est choisi parmi ceux comportant de 4 à 8 atomes de carbone, tels que le butadiène (1,3-butadiène), l'isoprène (2-méthyl-1,3-butadiène), le 2,3-diméthyl-1,3-butadiène, le 1,3-pentadiène, le 1,3-hexadiène, le 1,2-hexadiène, le chloroprène, le butadiène carboxylé, l'isoprène carboxylé, pris seuls ou en mélange. De préférence, le diène conjugué est le butadiène.

L'hydrocarbure monovinyl aromatique est choisi parmi le styrène, l'o-méthyl styrène, le p-méthyl styrène, le p-tert-butyl styrène, le 2,3 diméthyl styrène, le 2,4 diméthyl styrène, l'a-méthyl styrène, le vinyl naphtalène, le vinyl toluène, le vinyl xylène, pris seuls ou en mélange. De préférence, l'hydrocarbure monovinyl aromatique est le styrène. Le copolymère diséquencé d'un bloc hydrocarbure monovinyl aromatique et d'un bloc diène conjugué est donc de préférence un copolymère diséquencé de styrène et de butadiène.

Le copolymère diséquencé d'un bloc hydrocarbure monovinyl aromatique et d'un bloc diène conjugué selon l'invention a une masse moléculaire supérieure ou égale à 80 000 g.mol$^{-1}$. La masse moléculaire du copolymère est mesurée par chromatographie GPC avec un étalon polystyrène selon la norme ASTM D3536.

De préférence le copolymère diséquencé d'un bloc hydrocarbure monovinyl aromatique et d'un bloc diène conjugué selon l'invention a une masse moléculaire supérieure ou égale à 90 000 g.mol$^{-1}$, plus préférentiellement supérieure ou égale à 100 000 g.mol$^{-1}$, encore plus préférentiellement supérieure ou égale à 110 000 g.mol$^{-1}$, encore plus préférentiellement supérieure ou égale à 120 000 g.mol$^{-1}$, encore plus préférentiellement supérieure ou égale à 130 000 g.mol$^{-1}$. De préférence le copolymère diséquencé d'un bloc hydrocarbure monovinyl aromatique et d'un bloc diène conjugué selon l'invention a une masse moléculaire comprise entre 80 000 et 500 000 g.mol$^{-1}$, plus préférentiellement entre 90 000 et 400 000 g.mol$^{-1}$, encore plus préférentiellement entre 100 000 et 300 000 g.mol$^{-1}$, encore plus préférentiellement entre 110 000 et 200 000 g.mol$^{-1}$, encore plus préférentiellement entre 120 000 et 150 000 g.mol$^{-1}$.

La masse élevée du copolymère diséquencé d'un bloc hydrocarbure monovinyl aromatique et d'un bloc diène conjugué selon l'invention, permet d'avoir une compatibilité optimale entre le copolymère et le bitume (le copolymère n'est pas dissout dans le bitume mais gonflé, solvaté dans le bitume), permet aux compositions bitumineuses réticulées d'avoir une meilleure consistance (notamment au niveau de la température Bille et Anneau), un meilleur retour élastique et de meilleures propriétés en traction.

Le copolymère diséquencé d'un bloc hydrocarbure monovinyl aromatique et d'un bloc diène conjugué selon l'invention possède une quantité d'hydrocarbure monovinyl aromatique de 20% à 50% en masse, par rapport à la masse du copolymère, de préférence de 30% à 40%. Lorsque le copolymère diséquencé d'un bloc hydrocarbure monovinyl aromatique et d'un bloc diène conjugué selon l'invention comprend une charnière, cette charnière est de préférence statistique et la quantité d'hydrocarbure monovinyl aromatique sous forme de bloc est de 15% à 30% en masse, de préférence de 18% à 25% en masse, par rapport à la masse du copolymère, et la quantité d'hydrocarbure monovinyl aromatique dans la charnière statistique est de 5% à 20% en masse, de préférence de 12% à 15% en masse, par rapport à la masse du copolymère.

Le copolymère diséquencé d'un bloc hydrocarbure monovinyl aromatique et d'un bloc diène conjugué selon l'invention possède une quantité de diène conjugué de 50% à 80% en masse, par rapport à la masse du copolymère, de préférence de 60% à 70%. Parmi ces motifs diène conjugué, on distingue les motifs à doubles liaisons 1-4 issus du diène conjugué et les motifs à doubles liaisons 1-2 issus du diène conjugué. Par motifs à doubles liaisons 1-4 issus du diène conjugué, on entend les motifs obtenus via une addition 1,4 lors de la polymérisation du diène conjugué. Par motifs à doubles liaisons 1-2 issus du diène conjugué, on entend les motifs obtenus via une addition 1,2 lors de la polymérisation du diène conjugué. Le résultat de cette addition 1,2 est une double liaison vinylique dite « pendante ».

Le copolymère diséquencé d'un bloc hydrocarbure monovinyl aromatique et d'un bloc diène conjugué selon l'invention possède une teneur en motifs à doubles liaisons 1-2 issus du diène conjugué comprise entre 15% et 30% en masse, par rapport à la masse totale des motifs diène conjugué, de préférence entre 20% et 25% en masse. Sans être liée par la théorie qui va suivre, la société demanderesse suppose que la réticulation observée dans le procédé selon l'invention est due à la présence de ces doubles liaisons vinyliques pendantes dans le copolymère diséquencé d'un bloc hydrocarbure monovinyl aromatique et d'un bloc diène conjugué, qui réagissent à haute température pour lier les différentes chaînes de copolymère entre elles. La présence de ces motifs à doubles liaisons 1-2 issus du diène conjugué est donc essentielle au procédé selon l'invention. La teneur en motifs à doubles liaisons 1-2 issus du diène conjugué ne doit cependant pas être trop importante, elle doit être inférieure ou égale à 30% en masse, par rapport à la masse des motifs diène conjugué, pour éviter une trop forte réticulation des compositions bitume/polymère qui pourrait engendrer une trop grande rigidité des compositions bitume/polymère ou une gélification irréversible ou une séparation de phases selon la teneur en copolymère dans le bitume. La teneur en motifs à doubles liaisons 1-2 issus du diène conjugué doit aussi être supérieure ou égale à 15% en masse, par rapport à la masse totale des motifs diène conjugué, pour observer une réticulation des compositions bitume/polymère qui n'a pas lieu à des teneurs inférieures.

Le procédé selon l'invention met en oeuvre une composition polymérique comprenant le copolymère diséquencé d'un bloc hydrocarbure monovinyl aromatique et d'un bloc diène conjugué tel que défini ci-dessus. La quantité de copolymère diséquencé d'un bloc hydrocarbure monovinyl aromatique et d'un bloc diène conjugué dans la composition polymérique est supérieure ou égale à 80% en masse, par rapport à la masse de composition polymérique, de préférence supérieure ou égale à 85% en masse, plus préférentiellement supérieure ou égale à 90% en masse, encore plus préférentiellement supérieure ou égale à 95% en masse, encore plus préférentiellement supérieure ou égale à 98% en masse. De préférence, la composition polymérique ne comprend que le copolymère diséquencé d'un bloc hydrocarbure monovinyl aromatique et d'un bloc diène conjugué tel que défini ci-dessus.

Les autres polymères présents éventuellement dans la composition polymérique sont les polymères classiquement utilisables dans le domaine des compositions bitume/polymère comme par exemple, les copolymères triblocs d'un bloc hydrocarbure monovinyl aromatique et d'un bloc diène conjugué tels que les copolymères triblocs styrène/butadiène/styrène SBS, les copolymères blocs hydrocarbure monovinyl aromatique et d'un bloc diène conjugué multibranchés, tels que les copolymères blocs multibranchés styrène/butadiène $(SB)_nX$, les copolymères d'un bloc hydrocarbure monovinyl aromatique et d'un bloc diène conjugué « random » tels que les copolymères styrène/butadiène rubber SBR, les polybutadiènes, les polyisoprènes, les poudrettes de caoutchouc issues du recyclage des pneumatiques, les caoutchoucs butyle, les polyacrylates, les polyméthacrylates, les polychloroprènes, les polynorbornènes, les polybutènes, les polyisobutènes, les polyoléfines telles que les polyéthylènes, les polypropylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène-acrylate ou méthacrylate d'alkyle/acrylate ou méthacrylate de glycidyle et notamment les terpolymères éthylène-acrylate de méthyle/méthacrylate de glycidyle et les terpolymères éthylène /acrylate ou méthacrylate d'alkyle/anhydride maléique et notamment les terpolymères éthylène/acrylate de butyle/anhydride maléique.

Le copolymère diséquencé d'un bloc hydrocarbure monovinyl aromatique et d'un bloc diène conjugué selon l'invention est mis en oeuvre sous forme de poudre, de pellets, de pellets broyées ou de « crumb » (morceaux ou pain).

La quantité de composition polymérique, et en particulier de copolymère diséquencé d'un bloc hydrocarbure monovinyl aromatique et d'un bloc diène conjugué, mise en oeuvre dans le procédé est de 1% à 30% en masse, par rapport à la masse de la composition bitume/polymère, de préférence de 2% à 20%, plus préférentiellement de 5% à 10%.

Le bitume utilisable selon l'invention peut être un bitume issu de différentes origines. Le bitume utilisable selon l'invention peut être choisi parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables. Le bitume peut être un bitume d'origine naphténique ou paraffinique, ou un mélange de ces deux bitumes. On préfère les bitumes d'origine paraffinique.

La quantité de bitume, mise en oeuvre dans le procédé est de 70% à 99% en masse, par rapport à la masse de la composition bitume/polymère, de préférence de 80% à 98%, plus préférentiellement de 85% à 90%.

En complément du bitume et de la composition polymérique comprenant le copolymère diséquencé d'un bloc hydrocarbure monovinyl aromatique et d'un bloc diène conjugué, d'autres ingrédients optionnels communément utilisés dans les bitumes peuvent être présents. Ces ingrédients pourront être des cires, des résines, des huiles, des dopes d'adhésivité et/ou des acides et leurs dérivés.

La température utilisée dans le procédé selon l'invention est un paramètre très important. Le procédé met en oeuvre des températures comprises entre 180°C et 220°C, de préférence entre 185°C et 215°C, plus préférentiellement entre 190°C et 210°C, encore plus préférentiellement entre 195°C et 205°C. La société demanderesse s'est aperçue que ces intervalles de température préférés permettent de réticuler le copolymère diséquencé d'un bloc hydrocarbure monovinyl aromatique et d'un bloc diène conjugué tel que défini ci-dessus dans le bitume alors que des températures en dehors de ces intervalles de température préférés ne permettent pas de réticuler correctement ledit copolymère. En effet, des températures inférieures ne permettent pas de réticuler ledit copolymère dans le bitume à moins de laisser en contact le bitume et le copolymère pendant plusieurs jours, voire plusieurs semaines. Ceci n'est pas souhaitable, ni envisageable d'un point de vue industriel et technique, puisque des durées de contact entre le bitume et le copolymère plus longues peuvent entraîner des séparations de phase entre le bitume et le copolymère, des dégradations au niveau du copolymère (oxydation et/ou coupures de chaînes) et une oxydation du bitume. Des températures supérieures, quant à elles, peuvent aussi dégrader ledit copolymère (oxydation et/ou coupures de chaînes) et dégrader le bitume (oxydation). De même, on peut parfois observer que la composition bitume/polymère devient alors trop visqueuse (allant parfois jusqu'à la gélification), trop rigide et cassante.

La durée de contact entre le bitume et la composition polymérique comprenant le copolymère diséquencé d'un bloc hydrocarbure monovinyl aromatique et d'un bloc diène conjugué tel que défini ci-dessus est autre paramètre très important qui va de pair avec les intervalles de températures définis ci-dessus. Ainsi, le procédé met en oeuvre un contact entre le bitume et la composition polymérique comprenant le copolymère diséquencé d'un bloc hydrocarbure monovinyl aromatique et d'un bloc diène conjugué pendant une durée de 8 heures à 48 heures, de préférence de 8 heures à 30 heures, plus préférentiellement de 8 heures à 24 heures, encore plus préférentiellement de 10 heures à 20 heures, encore plus préférentiellement de 12 heures à 16 heures. Une durée inférieure à 4 heures est insuffisante pour obtenir une réticulation optimale et des durées supérieures peuvent entraîner les désavantages mentionnés ci-dessus. La société demanderesse s'est aperçue que la combinaison de l'intervalle de température de 180°C à 220°C et de l'intervalle de durée de 8 heures à 48 heures, permet de réticuler le copolymère diséquencé d'un bloc hydrocarbure monovinyl aromatique et d'un bloc diène conjugué dans le bitume alors que des températures et des durées en dehors de ces intervalles, ne permettent pas de réticuler de manière optimale ledit copolymère.

La réticulation des compositions bitume/polymère peut être mise en évidence en effectuant sur ces compositions bitume/polymère, des tests de traction selon la norme NF EN 13587. Les compositions bitume/polymère réticulées ont une résistance à la traction plus élevée que les compositions bitume/polymère non réticulées. Une résistance à la traction plus élevée se traduit par un allongement à la rupture ou élongation maximale ($\varepsilon$ max en %) élevée, une contrainte à la rupture ou contrainte à l'élongation maximale ($\sigma$ $\varepsilon$ max en MPa) élevée, une énergie conventionnelle à 400% (E 400% en J/cm$^2$) élevée et/ou une énergie totale (E totale en J) élevée.

Le procédé selon l'invention permet donc l'obtention de compositions bitume/polymère réticulées ayant une élongation maximale, selon la norme NF EN 13587, supérieure ou égale à 400%, de préférence supérieure ou égale à 500%, plus préférentiellement supérieure ou égale à 600%, encore plus préférentiellement supérieure ou égale à 700%.

Le procédé selon l'invention permet donc l'obtention de compositions bitume/polymère réticulées ayant une contrainte à l'élongation maximale, selon la norme NF EN 13587, supérieure ou égale à 0,4 MPa, de préférence supérieure ou égale à 0,6 MPa, plus préférentiellement supérieure ou égale à 0,8 MPa, encore plus préférentiellement supérieure ou égale à 1,2 MPa.

Le procédé selon l'invention permet donc l'obtention de compositions bitume/polymère réticulées ayant une énergie conventionnelle à 400%, selon la norme NF EN 13587, supérieure ou égale à 3 J/cm$^2$, de préférence supérieure ou égale à 5 J/cm$^2$, plus préférentiellement supérieure ou égale à 10 J/cm$^2$, encore plus préférentiellement supérieure ou égale à 15 J/cm$^2$.

Le procédé selon l'invention permet donc l'obtention de compositions bitume/polymère réticulées ayant une énergie totale, selon la norme NF EN 13587, supérieure ou égale à 1 J, de préférence supérieure ou égale à 2 J, plus préférentiellement supérieure ou égale à 4 J, encore plus préférentiellement supérieure ou égale à 5 J.

D'autres paramètres peuvent intervenir dans le procédé selon l'invention. Ces paramètres sont par exemple la façon de mettre en contact le bitume et la composition polymérique, la forme du réacteur contenant le bitume et la composition polymérique, la présence d'air ou non. Ces paramètres ne sont pas déterminants pour le procédé selon l'invention.

Ainsi, le bitume et la composition polymérique sont mis en contact sous agitation ou non. De préférence, le bitume et la composition polymérique sont d'abord mis en contact sous agitation pour homogénéiser le mélange bitume/polymère, puis l'agitation est stoppée une fois le mélange homogène. Lorsqu'il y a agitation, l'agitation est de préférence forte dans un premier temps puis modérée par la suite. Lorsque le bitume et la composition polymérique sont mis en contact sous agitation, ceux-ci sont par exemple dans un réacteur et lorsque le bitume et la composition polymérique sont mis en contact sans agitation, ils peuvent être par exemple dans des bacs de stockage, des camions, des citernes etc. De préférence, le bitume et la composition polymérique sont mis en contact sous agitation, de préférence forte, pendant au moins 10 minutes, de préférence au moins 30 minutes, plus préférentiellement au moins 1 heure, encore plus préférentiellement au moins 2 heures, encore plus préférentiellement au moins 3 heures, encore plus préférentiellement au moins 4 heures, les dernières heures du procédé étant effectuées sans agitation ou avec une agitation modérée.

L'invention concerne aussi les compositions bitume/polymère réticulées obtenues par le procédé selon l'invention. Ces compositions bitume/polymère réticulées se distinguent par une composition polymérique de départ comprenant au moins 80% en masse de copolymère diséquencé d'un bloc hydrocarbure monovinyl aromatique et d'un bloc diène conjugué ayant une masse moléculaire supérieure ou égale à 80 000 g.mol$^{-1}$ et une teneur en motifs à doubles liaisons 1-2 issus du diène conjugué comprise entre 15% et 30% en masse par rapport à la masse totale des motifs diène conjugué, ledit copolymère étant réticulé au sein de la matrice bitumineuse. Ces compositions bitume/polymère réticulées obtenues par le procédé selon l'invention sont structurellement différentes de compositions bitume/polymère obtenues à partir d'une composition polymérique de départ comprenant un copolymère diséquencé d'un bloc hydrocarbure monovinyl aromatique et d'un bloc diène conjugué ayant une masse inférieure ou supérieure à 80 000 g.mol$^{-1}$ et une teneur en motifs à doubles liaisons 1-2 issus du diène conjugué inférieure à 15% en masse par rapport à la masse totale des motifs diène conjugué. En effet, de telles compositions bitume/polymère ne peuvent pas être réticulées du fait de leur trop faible teneur en liaisons vinyliques pendantes. Pour réticuler ces compositions bitume/polymère, un agent réticulant à base de soufre est nécessaire. Dans ce cas les chaînes de copolymère sont réticulées, liées entre elles par des ponts contenant du soufre alors que dans la réticulation thermique mise en oeuvre dans le procédé selon l'invention, ces ponts de soufre entre les chaînes de copolymère n'existent pas. Une composition bitume/polymère réticulée thermiquement est donc structurellement différente d'une composition bitume/polymère réticulée au soufre.

De plus les compositions bitume/polymère réticulées obtenues par le procédé selon l'invention sont structurellement différentes de compositions bitume/polymère obtenues à partir d'une composition polymérique de départ comprenant un copolymère diséquencé d'un bloc hydrocarbure monovinyl aromatique et d'un bloc diène conjugué ayant une masse inférieure à 80 000 g.mol$^{-1}$ et une teneur en motifs à doubles liaisons 1-2 issus du diène conjugué supérieure à 30% en masse par rapport à la masse totale des motifs diène conjugué. En effet, une composition bitume/polymère réticulée obtenue à partir d'une composition polymérique de départ comprenant un copolymère diséquencé d'hydrocarbure monovinyl aromatique et de diène conjugué ayant une teneur en motifs à doubles liaisons 1-2 issus du diène conjugué inférieure ou égale à 30% en masse par rapport à la masse totale des motifs diène conjugué possède un réseau tridimensionnel et des propriétés physiques différents d'une composition bitume/polymère réticulée obtenue à partir d'une composition polymérique de départ comprenant un copolymère diséquencé d'hydrocarbure monovinyl aromatique et de diène conjugué ayant aussi une teneur en motifs à doubles liaisons 1-2 issus du diène conjugué supérieure à 30% en masse par rapport à la masse totale des motifs diène conjugué. La présence d'une quantité plus importante de liaisons vinyliques pendantes va induire une réticulation plus prononcée, un réseau tridimensionnel plus important et peut rigidifier trop fortement la composition bitume/polymère réticulée qui peut alors devenir cassante ou gélifier. Enfin par des méthodes analytiques comme la chromatographie GPC, il est possible de distinguer un polymère de masse initiale supérieure ou égale à 80 000 g.mol$^{-1}$, de préférence supérieure ou égale à 90 000 g.mol$^{-1}$, plus préférentiellement supérieure ou égale à 100 000 g.mol$^{-1}$, encore plus préférentiellement supérieure ou égale à 110 000 g.mol$^{-1}$, encore plus préférentiellement supérieure ou égale à 120 000 g.mol$^{-1}$, encore plus préférentiellement supérieure ou égale à

**EP 2 459 621 B1**

130 000 g.mol$^{-1}$ réticulé dans un bitume d'un polymère de masse initiale inférieure à 80 000 g.mol$^{-1}$ lui aussi réticulé dans un bitume.

L'invention concerne aussi l'utilisation d'une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse par rapport à la masse totale des motifs diène conjugué, dans un bitume pour réticuler sans agent réticulant une composition bitume/polymère. Le bitume, la composition polymérique, en particulier le copolymère diséquencé d'un bloc hydrocarbure monovinyl aromatique et d'un bloc diène conjugué, utilisés sont ceux décrits ci-dessus.

Les compositions bitume/polymère obtenues selon le procédé de l'invention pourront être utilisées comme liants bitumineux sous forme anhydre ou sous forme d'une émulsion. Les compositions bitume/polymère obtenues selon le procédé de l'invention pourront être utilisées en applications routières pour fabriquer des enrobés à chaud, des enrobés tièdes, des enrobés à froid, des enrobés coulés à froid, des asphaltes ou des enduits superficiels et/ou en applications industrielles pour fabriquer des revêtements d'étanchéité, des membranes ou des couches d'imprégnation.

L'invention concerne aussi un procédé de préparation de compositions bitume/polymère réticulées, sans ajout d'agent réticulant, par la technique dite de la « solution-mère ». Au lieu de mettre en contact le bitume et la composition polymérique, la composition polymérique est d'abord mise en contact avec une huile puis le mélange huile/composition polymérique est dilué par un bitume. Cette technique de la « solution-mère », permet de fabriquer des solutions-mères très concentrées en polymère qui sont ensuite diluées par du bitume.

Le bitume, la composition polymérique, en particulier le copolymère diséquencé d'un bloc hydrocarbure monovinyl aromatique et d'un bloc diène conjugué, utilisés sont ceux décrits ci-dessus.

Deux modes de réalisation différents peuvent être envisagés pour préparer la solution-mère. Dans un premier mode de réalisation, la solution-mère est réticulée sans agent réticulant dans l'huile, puis diluée avec du bitume. Dans un deuxième mode de réalisation, la solution-mère dans un premier temps n'est pas réticulée dans l'huile, elle est réticulée sans agent réticulant dans un deuxième temps lors de la dilution avec du bitume.

Selon le premier mode de réalisation, pour préparer la solution-mère réticulée sans agent réticulant, on met en contact, éventuellement sous agitation, à une température comprise entre 180°C et 220°C, pendant une durée de 8 heures à 48 heures :

- au moins une huile,
- éventuellement au moins un bitume, et
- au moins une composition polymérique comprenant au moins 80% en masse, par rapport à la masse de composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse par rapport à la masse totale des motifs diène conjugué, étant entendu que si la solution-mère comprend à la fois une huile et du bitume, le rapport entre les quantités en masse d'huile et de bitume est compris entre 2:1 et 20:1 ;

ledit copolymère diséquencé comprenant, par rapport à la masse dudit copolymère, une quantité d'hydrocarbure monovinyl aromatique de 20% à 50% en masse et une quantité de diène conjugué de 50% à 80% en masse ; et la quantité de composition polymérique étant comprise entre 5% et 50%, par rapport à la masse de ladite solution-mère.

De préférence, on maintient la température entre 185°C et 215°C, plus préférentiellement entre 190°C et 210°C, encore plus préférentiellement entre 195°C et 205°C. De préférence, la durée de contact entre l'huile, éventuellement le bitume et la composition polymérique est de 8 heures à 30 heures, plus préférentiellement de 8 heures à 24 heures, encore plus préférentiellement de 10 heures à 20 heures, encore plus préférentiellement de 12 heures à 16 heures. Il est entendu que les intervalles de température précités et les intervalles de durée précités peuvent être combinés entre eux. La combinaison de ces intervalles de température et de durée, permet de réticuler de manière optimale le copolymère diséquencé d'un bloc hydrocarbure monovinyl aromatique et d'un bloc diène conjugué dans l'huile.

Il est décrit que pour préparer la solution-mère non réticulée, on met en contact, éventuellement sous agitation, à une température comprise entre 120°C et 160°C, de préférence entre 130°C et 150°C, pendant une durée de 15 minutes à 4 heures, de préférence de 30 minutes à 3 heures, plus préférentiellement de 1 heure à 2 heures, au moins une huile, éventuellement au moins un bitume, et au moins une composition polymérique comprenant au moins 80% en masse, par rapport à la masse de composition polymérique, d'un copolymère diséquencé d'un bloc hydrocarbure monovinyl aromatique et d'un bloc diène conjugué ayant une masse moléculaire supérieure ou égale à 80 000 g.mol$^{-1}$ et une teneur en motifs à doubles liaisons 1-2 issus du diène conjugué supérieure ou égale à 15% en masse par rapport à la masse totale des motifs diène conjugué. Les conditions de température et de durée utilisées ne permettent pas dans ce deuxième mode de réalisation d'obtenir une solution-mère réticulée.

Dans les deux modes de réalisation, l'huile utilisée pourra être une huile d'origine pétrolière ou une huile d'origine végétale ou un mélange des deux.

La solution-mère réticulée ou non réticulée (c'est-à-dire obtenue respectivement selon le premier mode de réalisation ou le deuxième mode de réalisation) concentrée en polymère comprend, par rapport à la masse de la solution-mère, de 5% à 50% de composition polymérique, en particulier de copolymère diséquencé d'un bloc hydrocarbure monovinyl aromatique et d'un bloc diène conjugué tel que défini ci-dessus, de préférence de 10% à 40%, plus préférentiellement de 20% à 30%.

Lorsque la solution-mère réticulée ou non réticulée comprend à la fois une huile et du bitume, la quantité d'huile est majoritaire par rapport à la quantité de bitume. le rapport entre les quantités en masse d'huile et de bitume est compris entre 20 :1 et 2 :1, de préférence entre 10 :1 et 5 :1, plus préférentiellement entre 8 :1 et 3 :1. De préférence, la solution-mère réticulée ou non réticulée ne comprend pas de bitume.

La solution-mère réticulée ou non réticulée peut être diluée immédiatement, quelques heures après sa fabrication ou bien plusieurs jours après son stockage. La solution-mère réticulée ou non réticulée peut être stockée pendant plusieurs jours, par exemple de 2 à 15 jours, de préférence de 4 à 10 jours, éventuellement sous agitation, à une température comprise entre 120°C et 160°C, de préférence entre 130°C et 150°C, sans gélification.

La solution-mère réticulée ou non réticulée est diluée avec un bitume, après sa préparation ou son stockage, pour fournir des compositions bitume/polymère réticulées comprenant de 1% à 30% en masse de composition polymérique, en particulier de copolymère diséquencé d'un bloc hydrocarbure monovinyl aromatique et d'un bloc diène conjugué tel que défini ci-dessus, par rapport à la masse de la composition bitume/polymère, de préférence de 2% à 20%, plus préférentiellement de 5% à 10%.

Dans le premier mode de réalisation, la solution-mère réticulée est diluée avec du bitume à une température comprise entre 160°C et 220°C, de préférence entre 180°C et 200°C, éventuellement sous agitation, pendant une durée de 15 minutes à 4 heures, de préférence de 30 minutes à 3 heures, plus préférentiellement de 1 heure à 2 heures. De préférence, la solution-mère réticulée est diluée dans le bitume sous agitation, de préférence sous forte agitation.

Dans le deuxième mode de réalisation, la solution-mère non réticulée est diluée avec du bitume à une température comprise entre 180°C et 220°C, de préférence entre 185°C et 215°C, plus préférentiellement entre 190°C et 210°C, encore plus préférentiellement entre 195°C et 205°C, éventuellement sous agitation, pendant une durée de 8 heures à 48 heures, de préférence de 8 heures à 30 heures, plus préférentiellement de 8 heures à 24 heures, encore plus préférentiellement de 10 heures à 20 heures, encore plus préférentiellement de 12 heures à 16 heures. De préférence, la solution-mère non réticulée est diluée dans le bitume sous agitation, de préférence sous forte agitation.

Les compositions bitume/polymère réticulées via la technique de la solution-mère possèdent d'aussi bonnes caractéristiques de traction, définies ci-dessus, que les compositions bitume/polymère réticulées selon le procédé selon l'invention faisant intervenir directement le bitume et la composition polymérique.

## EXEMPLES

On prépare des compositions bitume/polymère témoins et des compositions bitume/polymère selon l'invention pour évaluer et comparer leurs caractéristiques physico-mécaniques.

Pour chacune des compositions bitume/polymère préparées comme indiqué dans les exemples 1 à 6, on détermine les caractéristiques suivantes :

- pénétrabilité à 25°C notée $P_{25}$ (1/10 mm) mesurée selon la norme EN 1426,
- température Bille et Anneau notée TBA (°C) mesurée selon la norme EN 1427,
- indice de Pfeiffer noté IP défini par la formule suivante :

$$IP = \frac{1952 - 500 \times \log(P_{25}) - 20 \times TBA}{50 \times \log(P_{25}) - TBA - 120}$$

- retour élastique noté RE (%) mesuré à 25°C selon la norme NF EN 13398,
- contrainte seuil notée $\sigma$ seuil (MPa), contrainte à l'élongation maximale notée $\sigma \varepsilon$ max (MPa), élongation seuil notée $\varepsilon$ seuil (%), élongation maximale notée $\varepsilon$ max (%), énergie conventionnelle d'élongation à 400% notée E 400% ($J/cm^2$), énergie totale notée E totale (J), mesurées selon la norme NF EN 13587, l'essai de traction étant réalisé à 5°C avec une vitesse d'étirement de 100 mm/minute.

Les résultats obtenus sont rassemblés dans les tableaux 1 à 3 ci-dessous.

Exemple 1 (témoin)

On prépare une composition bitume/polymère témoin T$_1$ dans laquelle la composition bitume/polymère est réticulée au soufre (vulcanisation).

Dans un réacteur maintenu à 190°C et sous agitation à 300 tours/min, on introduit 94,87% en masse d'un bitume de distillation directe d'origine paraffinique de pénétrabilité 46 1/10 mm selon la norme NF EN 1426 et 5% en masse d'un copolymère diséquencé styrène/butadiène SB à charnière statistique ayant une masse moléculaire égale à 115 000 g.mol$^{-1}$, une quantité en masse de styrène de 25%, par rapport à la masse du copolymère, dont 18% sous forme de bloc et une quantité en masse de butadiène de 75%, par rapport à la masse du copolymère, la quantité en masse de motifs à double liaison 1-2 issus du butadiène étant de 12% par rapport à la quantité en masse de butadiène. Le contenu du réacteur est ensuite maintenu à 190°C sous agitation à 300 tours/min pendant 4 heures. On introduit ensuite dans le réacteur 0,13 % en masse de soufre en fleur, par rapport à la masse de la composition bitume/polymère. Le contenu du réacteur est maintenu à 190°C sous agitation à 300 tours/min pendant 2 heures, puis à 180°C sous agitation à 150 tours/min pendant 12 heures.

Exemple 2 (témoin)

On prépare une composition bitume/polymère témoin T$_2$ dans laquelle la composition bitume/polymère est traitée thermiquement et non réticulée au soufre.

Dans un réacteur maintenu à 190°C et sous agitation à 300 tours/min, on introduit 95% en masse de bitume d'origine paraffinique de pénétrabilité mesurée selon la norme EN 1426 de 46 1/10 mm et 5% en masse du copolymère diséquencé styrène/butadiène SB à charnière statistique utilisé dans l'exemple 1. Le contenu du réacteur est ensuite maintenu à 190°C sous agitation à 300 tours/min pendant 8 heures, puis à 190°C sous agitation à 150 tours/min jusqu'à 24 heures.

Tableau 1

|  | Composition T$_1$ | Composition T$_2$ |
|---|---|---|
| P$_{25}$ (1/10 mm) | 45 | 46 |
| TBA (°C) | 62,0 | 58,6 |
| IP | 1,2 | 0,5 |
| RE (%) | 91 | 62 |
| σ seuil (MPa) | 1,3 | 1,7 |
| σ ε max (MPa) | 0,9 | 0,2 |
| ε seuil (%) | 11,5 | 9,9 |
| ε max (%) | 700 | 180 |
| E 400% (J/cm$^2$) | 13,4 | - |
| E totale (J) | 3,0 | 0,8 |

La composition bitume/polymère T$_1$ réticulée au soufre présente de très bonnes caractéristiques de consistance et de très bonnes propriétés élastomériques contrairement à la composition bitume/polymère T$_2$ qui n'est pas réticulée thermiquement.

Exemple 3 (selon l'invention)

On prépare une composition bitume/polymère selon l'invention C$_3$ dans laquelle la composition bitume/polymère est réticulée thermiquement.

Dans un réacteur maintenu à 190°C et sous agitation à 300 tours/min, on introduit 95% en masse de bitume d'origine paraffinique de pénétrabilité mesurée selon la norme EN 1426 de 46 1/10 mm et 5% en masse de copolymère diséquencé styrène/butadiène SB à charnière statistique ayant une masse moléculaire égale à 129 000 g.mol$^{-1}$, une quantité de styrène en masse, par rapport à la masse du copolymère, de 33% dont 18,9% sous forme de bloc et une quantité en masse de butadiène de 66%, par rapport à la masse du copolymère, la quantité de motifs à double liaison 1-2 issus du butadiène étant de 18,5% par rapport à la quantité en masse de butadiène. Le contenu du réacteur est ensuite maintenu à 190°C sous agitation à 300 tours/min pendant 8 heures, puis à 190°C sous agitation à 150 tours/min jusqu'à 24 heures.

Exemple 4 (selon l'invention)

On prépare une composition bitume/polymère selon l'invention $C_4$ réticulée thermiquement en opérant comme décrit dans l'exemple 3 en utilisant 3% en masse de copolymère diséquencé styrène/butadiène SB à charnière statistique utilisé dans l'exemple 3 et 97% en masse du bitume utilisé dans l'exemple 3.

Exemple 5 (selon l'invention)

On prépare une composition bitume/polymère selon l'invention $C_5$ réticulée thermiquement en opérant comme décrit dans l'exemple 3 en utilisant un bitume d'origine paraffinique de pénétrabilité mesurée selon la norme EN 1426 de 53 1/10 mm, le contenu du réacteur étant maintenu à 190°C sous agitation à 300 tours/min pendant 8 heures, puis à 190°C sous agitation à 150 tours/min jusqu'à 16 heures.

Exemple 6 (selon l'invention)

On prépare une composition bitume/polymère selon l'invention $C_6$ réticulée thermiquement en opérant comme décrit dans l'exemple 3, le bitume étant un bitume d'origine paraffinique de pénétrabilité mesurée selon la norme EN 1426 de 53 1/10 mm, le contenu du réacteur étant maintenu à 200°C sous agitation à 300 tours/min pendant 8 heures.

Tableau 2

|  | $C_3$ | $C_4$ | $C_5$ | $C_6$ |
|---|---|---|---|---|
| Temps de réaction (h) | 24 | 24 | 16 | 8 |
| $P_{25}$ (1/10 mm) | 35 | 43 | 48 | 47 |
| TBA (°C) | 65,8 | 54,8 | 59,2 | 58,2 |
| IP | 1,3 | -0,4 | 0,8 | 0,5 |
| RE (%) | 81 | 66 | 75 | 72 |
| σ seuil (MPa) | 3,1 | 1,9 | 1,9 | 2,2 |
| σ ε max (MPa) | 1,3 | 0,4 | 0,8 | 0,4 |
| ε seuil (%) | 11,7 | 10,2 | 10,6 | 10,9 |
| ε max (%) | 700 | 700 | 700 | 700 |
| E 400% (J/cm$^2$) | 19,0 | 13,8 | 15,9 | 13,3 |
| E totale (J) | 4,1 | 2,2 | 3,1 | 1,9 |

D'après les résultats du Tableau 2, le procédé selon l'invention permet d'obtenir des compositions réticulées. Ainsi, les valeurs de pénétrabilité, température Bille et Anneau, retour élastique et les valeurs obtenues dans le test de traction, en particulier l'élongation maximale, la contrainte à l'élongation maximale et l'énergie conventionnelle à 400% des compositions $C_3$ à $C_6$ sont proches de celles obtenues pour le témoin $T_1$.

Les compositions bitume/polymère des exemples 3 à 5 sont encore chauffées à 190°C jusqu'à 48 heures, la composition bitume/polymère de l'exemple 6 est encore chauffée à 200°C jusqu'à 24 heures pour observer l'évolution de leurs propriétés. Les résultats sont dans le Tableau 3 ci-dessous.

Tableau 3

|  | $C_3$ | $C_4$ | $C_5$ | $C_6$ |
|---|---|---|---|---|
| Temps de réaction (h) | 48 | 48 | 48 | 24 |
| $P_{25}$ (1/10 mm) | 29 | 45 | 48 | 47 |
| TBA (°C) | 72,2 | 54,8 | 59,2 | 59,2 |

(suite)

|  | $C_3$ | $C_4$ | $C_5$ | $C_6$ |
|---|---|---|---|---|
| IP | 1,9 | -0,3 | 0,8 | 0,7 |
| RE (%) | 85 | 66 | 77 | 77 |
| σ seuil (MPa) | 2,9 | 2,1 | 1,9 | 1,7 |
| σ ε max (MPa) | 1,1 | 0,7 | 1,2 | 0,9 |
| ε seuil (%) | 11,0 | 9,0 | 10,9 | 11,7 |
| ε max (%) | 700 | 700 | 700 | 700 |
| E 400% (J/cm$^2$) | 17,2 | 16,3 | 18,6 | 15,7 |
| E totale (J) | 3,6 | 3,1 | 3,9 | 3,2 |

Ces résultats démontrent que les propriétés des compositions bitume/polymère réticulées selon les exemples 3 à 5 sont stables même après 48 heures et que les propriétés de la composition bitume/polymère réticulée selon l'exemple 6 sont stables même après 24 heures, les valeurs consignées dans les tableaux 2 et 3 étant du même ordre de grandeur.

**Revendications**

1. Procédé de préparation de compositions bitume/polymère réticulées sans agent réticulant, dans lequel on met en contact, éventuellement sous agitation, à une température entre 180°C et 220°C, pendant une durée de 8 heures à 48 heures :

   - au moins un bitume, dont la quantité est de 70% à 99% en masse, par rapport à la masse de la composition bitume/polymère, et
   - au moins une composition polymérique, dont la quantité est de 1% à 30% en masse, par rapport à la masse de la composition bitume/polymère ;

   ladite composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol$^{-1}$ et une teneur en motifs à doubles liaisons 1-2 issus du diène conjugué comprise entre 15% et 30% en masse, par rapport à la masse totale des motifs diène conjugué ;
   ledit copolymère diséquencé comprenant, par rapport à la masse dudit copolymère, une quantité d'hydrocarbure monovinyl aromatique de 20% à 50% en masse et une quantité de diène conjugué de 50% à 80% en masse.

2. Procédé selon la revendication 1 dans lequel le copolymère diséquencé a une teneur en motifs à doubles liaisons 1-2 issus du butadiène comprise entre 20% et 25% en masse par rapport à la masse totale des motifs diène conjugué.

3. Procédé selon la revendication 1 ou 2 dans lequel la masse moléculaire du copolymère diséquencé est supérieure ou égale à 90 000 g.mol$^{-1}$.

4. Procédé selon l'une quelconque des revendications 1 à 3 dans lequel la teneur en hydrocarbure monovinyl aromatique du copolymère diséquencé est comprise entre 30% et 40% en masse par rapport à la masse dudit copolymère.

5. Procédé selon l'une quelconque des revendications 1 à 4 dans lequel le copolymère diséquencé comprend une charnière statistique, la teneur en hydrocarbure monovinyl aromatique sous forme de bloc étant comprise entre 15% et 30% en masse par rapport à la masse dudit copolymère et la teneur en hydrocarbure monovinyl aromatique dans la charnière statistique étant comprise entre 5 et 20% en masse par rapport à la masse dudit copolymère.

6. Procédé selon l'une quelconque des revendications 1 à 5 dans lequel la composition polymérique comprend au moins 85% en masse de copolymère diséquencé, par rapport à la masse de la composition polymérique.

**7.** Composition bitume/polymère réticulée sans agent réticulant susceptible d'être obtenue par le procédé selon l'une quelconque des revendications 1 à 6.

**8.** Utilisation d'une composition polymérique, comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol⁻¹ et une teneur en motifs à doubles liaisons 1-2 issus du diène conjugué comprise entre 15% et 30% en masse par rapport à la masse totale des motifs diène conjugué, dans un bitume pour réticuler sans agent réticulant une composition bitume/polymère ;
ledit copolymère diséquencé comprenant, par rapport à la masse dudit copolymère, une quantité d'hydrocarbure monovinyl aromatique de 20% à 50% en masse et une quantité de diène conjugué de 50% à 80% en masse ;
la quantité de ladite composition polymérique mise en oeuvre dans ledit procédé étant de 1% à 30% en masse, par rapport à la masse de la composition bitume/polymère, et
la quantité de bitume mise en oeuvre dans ledit procédé étant de 70% à 99% en masse, par rapport à la masse de la composition bitume/polymère.

**9.** Procédé de préparation d'une solution-mère réticulée sans agent réticulant, dans lequel on met en contact, éventuellement sous agitation, à une température entre 180°C et 220°C, pendant une durée de 8 heures à 48 heures :

- au moins une huile,
- éventuellement au moins un bitume, et
- au moins une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol⁻¹ et une teneur en motifs à doubles liaisons 1-2 issus du diène conjugué comprise entre 15% et 30% en masse par rapport à la masse totale des motifs diène conjugué, étant entendu que si la solution-mère comprend à la fois une huile et du bitume, le rapport entre les quantités en masse d'huile et de bitume est compris entre 2:1 et 20:1 ;

ledit copolymère diséquencé comprenant, par rapport à la masse dudit copolymère, une quantité d'hydrocarbure monovinyl aromatique de 20% à 50% en masse et une quantité de diène conjugué de 50% à 80% en masse ; et
la quantité de composition polymérique étant comprise entre 5% et 50%, par rapport à la masse de ladite solution-mère.

**10.** Solution-mère réticulée sans agent réticulant susceptible d'être obtenue par le procédé selon la revendication 9.

**11.** Procédé de préparation de compositions bitume/polymère réticulées sans agent réticulant par dilution de la solution-mère selon la revendication 10, dans au moins un bitume, à une température comprise entre 160°C et 220°C, éventuellement sous agitation, pendant une durée de 15 minutes à 4 heures.

**12.** Procédé de préparation de compositions bitume/polymère réticulées sans agent réticulant par dilution d'une solution-mère non réticulée obtenue par mise en contact, éventuellement sous agitation, à une température entre 120°C et 160°C, pendant une durée de 15 minutes à 4 heures, au moins une huile, éventuellement au moins un bitume, et au moins une composition polymérique comprenant au moins 80% en masse, par rapport à la masse de la composition polymérique, d'un copolymère diséquencé d'un bloc hydrocarbure monovinyl aromatique et d'un bloc diène conjugué ayant une masse moléculaire mesurée par chromatographie GPC avec un étalon polystyrène selon la norme ASTM D3536 supérieure ou égale à 80 000 g.mol⁻¹ et une teneur en motifs à doubles liaisons 1-2 issus du diène conjugué comprise entre 15% et 30% en masse par rapport à la masse totale des motifs diène conjugué, ledit copolymère diséquencé comprenant, par rapport à la masse dudit copolymère, une quantité d'hydrocarbure monovinyl aromatique de 20% à 50% en masse, et une quantité de diène conjugué de 50% à 80% en masse ;
dans au moins un bitume, à une température comprise entre 180°C et 220°C, éventuellement sous agitation, pendant une durée de 8 heures à 48 heures, étant entendu que si la solution-mère comprend à la fois une huile et du bitume, le rapport entre les quantités en masse d'huile et de bitume est compris entre 2:1 et 20:1 ;
la quantité de composition polymérique mise en oeuvre dans ledit procédé étant de 1% à 30% en masse, par rapport à la masse de la composition bitume/polymère, et la quantité de bitume mise en oeuvre dans ledit procédé étant de 70% à 99% en masse, par rapport à la masse de la composition bitume/polymère.

**13.** Composition bitume/polymère réticulée sans agent réticulant susceptible d'être obtenue par le procédé selon l'une quelconque des revendications 11 et 12.

**Patentansprüche**

1. Verfahren zur Herstellung von vernetzten Bitumen-/ Polymerzusammensetzungen ohne Vernetzungsmittel, wobei bei einer Temperatur zwischen 180°C und 220°C, über einen Zeitraum von 8 bis 48 Stunden, unter eventuellem Rühren, Folgendes in Kontakt gebracht wird:

   - mindestens ein Bitumen, dessen Menge, im Verhältnis zur Masse der Bitumen-/Polymerzusammensetzung, 70 bis 99 Massen-% beträgt, und
   - mindestens eine Polymerzusammensetzung, dessen Menge, im Verhältnis zur Masse der Bitumen-/ Polymerzusammensetzung, 1 bis 30 Massen-% beträgt;

   wobei, im Verhältnis zur Masse der Polymerzusammensetzung, die Polymerzusammensetzung mindestens 80 Massen-% eines Diblock-copolymers eines monovinylaromatischen Kohlenwasserstoff-Blocks und eines konjugierten Dien-Blocks umfasst, der eine Molekularmasse aufweist die durch GPC-Chromatographie mit einem Polystyrol-Standard, gemäß der Norm ASTM D3536 gemessen, grösser oder gleich 80 000 g.mol$^{-1}$ ist, und einem Gehalt von Einheiten mit 1-2 Doppelbindungen aus dem konjugierten Dien, der im Verhältnis zur Gesamtmasse der konjugierten Dieneinheiten im Bereich von 15 und 30 Massen-% liegt; und wobei, im Verhältnis zur Masse des Copolymers, das Diblock-copolymer eine Menge von monovinylaromatischen Kohlenwasserstoff von 20 bis 50 Massen-% und eine Menge von konjugiertem Dien von 50 bis 80 Massen-% umfasst.

2. Verfahren nach Anspruch 1, wobei das Diblock-copolymer einen Gehalt von Einheiten mit 1-2 Doppelbindungen aus dem Butadien enthält, der im Verhältnis zur Gesamtmasse der konjugierten Dieneinheiten, im Bereich von 20 und 25 Massen-% liegt.

3. Verfahren nach Ansprüchen 1 oder 2, wobei die Molekularmasse des Diblock-copolymers grösser oder gleich 90 000 g.mol$^{-1}$ ist.

4. Verfahren nach einem der Ansprüche 1 bis 3, wobei, im Verhältnis zur Masse des Copolymers, der Gehalt des Diblock-copolymers an monovinylaromatischen Kohlenwasserstoff im Bereich von 30 und 40 Massen-% liegt.

5. Verfahren nach einem der Ansprüche 1 bis 4, wobei das Diblock-copolymer eine statistische Verbindung umfasst, und wobei, im Verhältnis zur Masse des Copolymers, der Gehalt an monovinylaromatischen Kohlenwasserstoff in Form von einem Block in einem Bereich von 15 und 30 Massen-% liegt und, im Verhältnis zur Masse des Copolymers, der Gehalt an monovinylaromatischen Kohlenwasserstoff in der statistischen Verbindung in einem Bereich von 5 und 20 Massen-% liegt.

6. Verfahren nach einem der Ansprüche 1 bis 5, wobei, im Verhältnis zur Masse der Polymerzusammensetzung, die Polymerzusammensetzung mindestens 85 Massen-% Diblock-copolymer umfasst.

7. Vernetzte Bitumen-/Polymerzusammensetzung ohne Vernetzungsmittel, die durch das Verfahren nach einem der Ansprüche 1 bis 6 erhalten werden kann.

8. Verwendung einer Polymerzusammensetzung, in einem Bitumen, die im Verhältnis zur Masse der Polymerzusammensetzung, mindestens 80 Massen-% eines Diblock-copolymers eines monovinylaromatischen Kohlenwasserstoff-Blocks und eines konjugierten Dien-Blocks umfasst, der eine Molekularmasse aufweist die durch GPC-Chromatographie mit einem Polystyrol-Standard, gemäß der Norm ASTM D3536 gemessen, grösser oder gleich 80 000 g.mol$^{-1}$ ist, und einem Gehalt von Einheiten mit 1-2 Doppelbindungen aus dem konjugierten Dien, der, im Verhältnis zur Gesamtmasse der konjugierten Dieneinheiten, im Bereich von 15 und 30 Massen-% liegt, um eine Bitumen-/Polymerzusammensetzung ohne Vernetzungsmittel zu vernetzen; wobei, im Verhältnis zur Masse des Copolymers, das Diblock-copolymer eine Menge von monovinylaromatischen Kohlenwasserstoff von 20 bis 50 Massen-% und eine Menge von konjugiertem Dien von 50 bis 80 Massen-% umfasst; wobei, im Verhältnis zur Masse der Bitumen-/Polymerzusammensetzung, die Menge der, in dem Verfahren hergestellten Polymerzusammensetzung 1 bis 30 Massen-% beträgt, und wobei, im Verhältnis zur Masse der Bitumen-/Polymerzusammensetzung, die Menge des in dem Verfahren hergestellten Bitumens 70 bis 99 Massen-% beträgt.

9. Verfahren zur Herstellung einer ohne Vernetzungsmittel vernetzten Stammlösung, in welchem, bei einer im Bereich von 180°C und 220°C liegenden Temperatur, über eine Dauer von 8 bis 48 Stunden, unter eventuellem Rühren, Folgendes in Kontakt gebracht wird:

   - mindestens ein Öl,
   - gegebenenfalls mindestens ein Bitumen, und
   - mindestens eine Polymerzusammensetzung die im Verhältnis zur Masse der Polymerzusammensetzung, mindestens 80 Massen-% eines Diblock-copolymers eines monovinylaromatischen Kohlenwasserstoff-Blocks und eines konjugierten Dien-Blocks umfasst, der eine Molekularmasse aufweist die durch GPC-Chromatographie mit einem Polystyrol-Standard, gemäß der Norm ASTM D3536 gemessen, grösser oder gleich 80 000 g.mol$^{-1}$ ist, und einem Gehalt von Einheiten mit 1-2 Doppelbindungen aus dem konjugierten Dien, der im Verhältnis zur Gesamtmasse der konjugierten Dieneinheiten, im Bereich von 15 und 30 Massen-% liegt,

   wobei davon auszugehen ist, dass falls die Stammlösung zugleich ein Öl und Bitumen umfasst, das Verhältnis zwischen den Mengen von Öl-/ und Bitumenmasse im Bereich von 2:1 und 20:1 liegt; wobei, im Verhältnis zur Masse des Copolymers, das Diblock-copolymer eine Menge von monovinylaromatischen Kohlenwasserstoff von 20 bis 50 Massen-% und eine Menge von konjugiertem Dien von 50 bis 80 Massen-% umfasst; und wobei, im Verhältnis zur Masse der Stammlösung, die Menge der Polymerzusammensetzung im Bereich von 5 und 50 Massen-% liegt.

10. Vernetzte Stammlösung ohne Vernetzungsmittel die durch das Verfahren nach Anspruch 9 erhalten werden kann.

11. Verfahren zur Herstellung von vernetzten Bitumen-/ Polymerzusammensetzungen ohne Vernetzungsmittel durch Verdünnung der Stammlösung, nach Anspruch 10, in mindestens einem Bitumen bei einer im Bereich von 160°C und 220°C liegenden Temperatur, unter eventuellem Rühren, über eine Dauer von 15 Minuten bis 4 Stunden.

12. Verfahren zur Herstellung von vernetzten Bitumen-/ Polymerzusammensetzungen ohne Vernetzungsmittel durch Verdünnung einer nicht vernetzten Stammlösung, die durch Inkontaktbringen, unter eventuellem Rühren, bei einer im Bereich von 120°C und 160°C liegenden Temperatur, über eine Dauer von 15 Minuten bis 4 Stunden, von mindestens einem Öl; gegebenenfalls mindestens einem Bitumen und mindestens einer Polymerzusammensetzung erhalten wurde welche, im Verhältnis zur Masse der Polymerzusammensetzung, mindestens 80 Massen-% eines Diblock-copolymers eines monovinylaromatischen Kohlenwasserstoff-Blocks und eines konjugierten Dien-Blocks umfasst, mit einer Molekularmasse die durch GPC-Chromatographie mit einem Polystyrol-Standard gemäß der Norm ASTM D3536 gemessen, grösser oder gleich 80 000 g.mol$^{-1}$ ist, und einem Gehalt von Einheiten mit 1-2 Doppelbindungen aus dem konjugierten Dien der, im Verhältnis zur Gesamtmasse der konjugierten Dieneinheiten, im Bereich von 15 und 30 Massen-% liegt, wobei, im Verhältnis zur Masse des Copolymers, das Diblock-copolymer eine Menge von monovinylaromatischen Kohlenwasserstoff von 20 bis 50 Massen-% und eine Menge von konjugiertem Dien von 50 bis 80 Massen-% umfasst; wobei in mindestens einem Bitumen, bei einer im Bereich von 180°C und 220°C liegenden Temperatur, unter eventuellem Rühren, über eine Dauer von 8 bis 48 Stunden, davon auszugehen ist, dass falls die Stammlösung zugleich ein Öl und Bitumen umfasst, das Verhältnis zwischen den Mengen von Öl-/ und Bitumenmasse im Bereich von 2:1 und 20:1 liegt, und wobei, im Verhältnis zur Bitumen-/Polymerzusammensetzung, die im Verfahren verarbeitete Menge der Polymerzusammensetzung aus 1 bis 30 Massen-% besteht, und, im Verhältnis zur Bitumen-/Polymerzusammensetzung, die im Verfahren verarbeitete Menge des Bitumens aus 70 bis 99 Massen-% besteht.

13. Vernetzte Bitumen-/Polymerzusammensetzung ohne Vernetzungsmittel, die durch das Verfahren nach einem der Ansprüche 11 und 12 erhalten werden kann.

**Claims**

1. A method for preparing crosslinked bitumen/polymer compositions without using any crosslinking agent, comprising contacting, optionally with stirring, at a temperature of between 180°C and 220°C for a duration of 8 to 48 hours:

   - at least one bitumen in an amount of 70% to 99% by weight with respect to the weight of the bitumen/polymer composition, and
   - at least one polymeric composition in an amount of between 1% and 30% by weight with respect to the weight of the bitumen/polymer composition;

said polymeric composition comprising at least 80% by weight, relative to the weight of the polymeric composition, of a diblock copolymer of a monovinylaromatic hydrocarbon block and of a conjugated diene block having a molecular weight measured by GPC chromatography with a polystyrene standard according to the ASTM D3536 standard of more than or equal to 80,000 g.mol$^{-1}$ and a content of 1-2 double bond units from the conjugate diene comprised between 15% and 30 % by weight with respect to the total weight of the conjugate diene units; said diblock copolymer comprising, with respect to the weight of said copolymer, an amount of monovinylaromatic hydrocarbon of 20% to 50% by weight, and an amount of conjugate diene of 50% to 80% by weight.

2. The method according to Claim 1 wherein the diblock copolymer has a content of 1-2 double bond units from the butadiene comprised between 20% and 25% by weight with respect to the total weight of the conjugate diene units.

3. The method according to Claim 1 or 2 wherein the molecular weight of diblock copolymer is greater than or equal to 90,000 g.mol$^{-1}$.

4. The method according to any one of Claims 1 to 3 wherein the monovinylaromatic hydrocarbon content of the diblock copolymer is comprised between 30% and 40% by weight with respect to the weight of the said copolymer.

5. The method according to any one of Claims 1 to 4 wherein the diblock copolymer comprises a random hinge, the content of monovinylaromatic hydrocarbon as a block being comprised between 15% and 30% by weight with respect to the weight of said copolymer and the monovinylaromatic hydrocarbon content in the random hinge being comprised between 5 and 20% by weight with respect to the weight of the said copolymer.

6. The method according to any one of Claims 1 to 5 wherein the polymeric composition comprises at least 85% by weight of diblock copolymer with respect to the weight of the polymeric composition.

7. A crosslinked bitumen/polymer composition without using any crosslinking agent, which may be obtained by the method according to any one of Claims 1 to 6.

8. The use of a polymeric composition comprising at least 80% by weight with respect to the weight of the polymeric composition, of a diblock copolymer of a monovinylaromatic hydrocarbon block and of a conjugate diene block having a molecular weight measured by GPC chromatography with a polystyrene standard according to the ASTM D3536 standard of more than or equal to 80,000 g.mol$^{-1}$ and a content of 1-2 double bond units from the conjugate diene comprised between 15% and 30% by weight with respect to the total weight of the conjugate diene units, in a bitumen for crosslinking a bitumen/polymer composition without using any crosslinking agent;

said diblock copolymer comprising with respect to the weight of said copolymer, an amount of monovinylaromatic hydrocarbon of 20% to 50% by weight, and an amount of conjugate diene of 50% to 80% by weight;
the applied amount of said polymeric composition in said method being comprised between 1% and 30% by weight with respect to the weight of the bitumen/polymer composition, and
the applied amount of bitumen in said method being from 70% to 99% by weight with respect to the weight of the bitumen/polymer composition.

9. A method for preparing a crosslinked stock solution without using any crosslinking agent, comprising bringing into contact, optionally with stirring, at a temperature comprised between 180°C and 220°C for a period of 8 hours to 48 hours:

- at least one oil,
- optionally at least one bitumen, and
- at least one polymeric composition comprising at least 80% by weight relative to the weight of the polymeric composition, of a diblock copolymer of a monovinylaromatic hydrocarbon block and of a conjugated diene block having a molecular weight measured by GPC chromatography with a polystyrene standard according to the ASTM D3536 standard of more than or equal to 80,000 g.mol$^{-1}$ and a content of 1-2 double bond units from the conjugate diene comprised between 15% and 30% by weight with respect to the total weight of the conjugate diene units, it being understood that when the stock solution includes both oil and bitumen, the weight amount ratio of oil and bitumen is comprised between 2:1 and 20:1;

said diblock copolymer comprising with respect to the weight of said copolymer, an amount of monovinylaromatic hydrocarbon of 20% to 50% by weight, and an amount of conjugate diene of 50% to 80% by weight; and

the amount of polymeric composition is comprised between 5% and 50% by weight, with respect to the weight of said stock solution.

10. A crosslinked stock solution without using any crosslinking agent, which may be obtained by the method according to claim 9.

11. A method for preparing crosslinked bitumen/polymer compositions without using any crosslinking agent by diluting the stock solution according to Claim 10, in at least one bitumen, at a temperature comprised between 160°C and 220°C, optionally with stirring, for a period of 15 minutes to 4 hours.

12. A method for preparing crosslinked bitumen/polymer compositions without using any crosslinking agent by diluting a stock solution, obtained by bringing into contact, optionally with stirring, at a temperature comprised between 120°C and 160°C, for 15 minutes to 4 hours, at least one oil, optionally at least one bitumen, and at least one polymeric composition comprising at least 80% by weight, relative to the weight of the polymeric composition, of a diblock copolymer of a monovinylaromatic hydrocarbon block and of a conjugated diene block having a molecular weight measured by GPC chromatography with a polystyrene standard according to the ASTM D3536 standard of more than or equal to 80,000 g.mol$^{-1}$ and a content of 1-2 double bond units from the conjugate diene comprised between 15% and 30% by weight with respect to the total weight of the conjugate diene units,

said diblock copolymer comprising with respect to the weight of said copolymer, an amount of monovinylaromatic hydrocarbon of 20% to 50% by weight, and an amount of conjugate diene of 50% to 80% by weight;
in at least one bitumen, at a temperature comprised between 180°C and 220°C, optionally with stirring, for a period of 8 hours to 48 hours, it being understood that when the stock solution includes both oil and bitumen, the weight amount ratio of oil and bitumen is comprised between 2:1 and 20:1;

the applied amount of polymeric composition in said method being comprised between 1% and 30% by weight with respect to the weight of the bitumen/polymer composition, and
the applied amount of bitumen in said method being from 70% to 99% by weight with respect to the weight of the bitumen/polymer composition.

13. Crosslinked bitumen/polymer compositions without using any crosslinking agent, which may be obtained by the method according to any one of Claims 11 and 12.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007058994 A
- WO 2008137394 A
- EP 0728814 A
- EP 0850277 A
- EP 0907686 A